# EUROPÄISCHE PATENTSCHRIFT

(11) **EP 0 888 928 B1**
(45) Veröffentlichungstag und Bekanntmachung des Hinweises auf die Patenterteilung: **28.08.2002**
(21) Anmeldenummer: 98111514.0
(22) Anmeldetag: 23.06.1998
(51) Int. Cl.: B60R 1/06

(54) **Motorisch verstellbarer Fahrzeugrückspiegel**
Motorized adjustable mirror for vehicles
Miroir rétroviseur de véhicule à réglage motorisé

(30) Priorität: 03.07.1997 DE 29711539 U
(43) Veröffentlichungstag der Anmeldung: 07.01.1999
(73) Patentinhaber: Donnelly Hohe GmbH & Co. KG, 97903 Collenberg (DE)
(72) Erfinder: Kaspar, Rudolf, 97903 Collenberg (DE)
(74) Vertreter: Böck, Bernhard, Dipl.-Ing.

(56) Entgegenhaltungen:
- DE-A- 4 009 444
- DE-A- 4 022 019
- DE-A- 19 521 432
- DE-A- 19 601 565
- DE-U- 29 618 937
- US-A- 5 166 825
- US-A- 5 430 624

## Beschreibung

Die Erfindung betrifft einen motorisch verstellbaren Fahrzeug-Rückspiegel Aus dem deutschen Gebranchsmuster DE 296 18 937 U ist ein Fahrzeug-Rückspiegel nach dem Oberbegriff des Anspruchs 1 offenbart dessen gehäuse zumindest eine Spiegelglasbaugruppe, einen Glasverstellantrieb und eine Verstärkerplatte beinhaltet, wobei der auf die Ausrichtung der Spiegelglasbaugruppe einwirkende Glasverstellantrieb mittels einer Befestigungseinrichtung an der Verstärkerplatte angebracht ist.

Motorisch verstellbare Fahrzeug-Rückspiegel sind auf dem Gebiet wohlbekannt. Dabei wird der Glasverstellantrieb über die verschiedensten Konstruktionen einer elektrischen Verbindung an eine Stromquelle angeschlossen.

Beispielsweise können Anschlußleitungen an die jeweiligen Anschlußklemmen des Glasverstellantriebs angelötet sein. Die anderen Enden der Anschlußleitungen sind aus dem Spiegelglasgehäuse herausgeführt und werden über einen Verbinder an die Stromquelle angeschlossen. Der notwendige Lötvorgang erhöht die Anzahl der zeitintensiven Arbeitsschritte beim Zusammenbau des Spiegels. Weiterhin besteht während der Montage des Spiegels die große Gefahr, daß bei der Befestigung des Glasverstellantriebs an der Verstärkerplatte die elektrischen Zuleitungen gequetscht werden.

In einer anderen Ausführungsform nach dem Stand der Technik wird die Kontaktierung mittels Steckverbinder realisiert, die am Antrieb angeordnet sind. Derartige Steckverbinder müssen an dieser exponierten Stelle feuchtigkeitsdicht ausgeführt werden, was deren Volumen erheblich vergrößert und die Montage zusätzlich erschwert. Weiterhin besteht auch bei dieser Ausführungsform die Gefahr, daß während der Montage Kabel gequetscht und schlimmstenfalls elektrische Verbindungen getrennt werden.

Aufgabe der Erfindung ist es somit, eine sichere und einfache Konstruktion für das elektrische Verbinden von elektrischen Komponenten innerhalb eines Fahrzeug-Rückspiegels zur Verfügung zu stellen.

Dies wird überraschend einfach mit der in dem Vorrichtungsanspruch 1 angegebenen Erfindung realisiert. Fortbildungen der Erfindung sind in den Unteransprüchen umfaßt.

Danach wird die elektrische Energie und/oder elektrische Signale zum Glasverstellantrieb zumindest abschnittsweise über die in diesem Bereich leitfähige Befestigungseinrichtung geführt. Somit kann die herkömmlicherweise notwendige zusätzliche elektrische Verbindung zwischen dem Glasverstellantrieb und dem Kabelsatz entfallen. Das Quetschen von Kabeln zwischen dem Glasverstellantrieb und der Verstärkerplatte ist ausgeschlossen. Durch das Wegfallen einer zusätzlichen elektrischen Verbindung erniedrigt sich der Arbeitsaufwand und der Platzbedarf im Spiegelgehäuse während der Montage.

Um eine sichere Anlage des Glasverstellantriebs an der Verstärkerplatte zu gewährleisten, kann die Befestigungseinrichtung zumindest drei Verbindungselemente umfassen. Sind diese Verbindungselemente selbst elektrisch leitfähig und voneinander elektrisch isoliert angeordnet, können die heutzutage üblichen drei elektrischen Anschlüsse des Glasverstellantriebs vollständig über die Befestigungseinrichtung geführt werden. Für die elektrische Kontaktierung können die Verbindungselemente in der Nähe zu oder an einem ersten Ende elektrisch mit den jeweiligen Anschlußleitungen des Motors, beispielsweise in Form von Kontaktstreifen, und in der Nähe zu oder an einem zweiten Ende elektrisch an einen die Strom- und/oder Datensignalversorgung bereitstellenden Kabelsatz angeschlossen werden.

Um eine kompakte Bauform sicherzustellen, können sich die zumindest abschnittsweise leitfähigen Verbindungselemente jeweils in Durchgangsöffnungen im Glasverstellantrieb erstrecken.

Als Verbindungselemente sind eine Vielzahl von herkömmlichen Verbindungseinrichtungen verwendbar, die gegebenenfalls in Bezug auf die elektrische Leitfähigkeit modifiziert werden müssen. Beispielsweise kann das Verbindungselement in einer einfachen Konstruktion eine Schraube mit einer Mutter umfassen, welche zwischen dem Kopf und der Mutter den Glasverstellantrieb und die Verstärkerplatte in Anlage hält. Um eine leichte Montage zu gewährleisten, kann das Verbindungselement auch aus zwei Teilen bestehen, wobei ineinandergreifende Abschnitte der beiden Teile einen Drehschnappverschluß bilden, und wieder zwischen den beiden Enden des Verbindungselementes zumindest der Glasverstellantrieb und die Verstärkerplatte in Anlage gehalten werden.

Als Verstärkerplatte sind übliche Spritzguß-Teile, aber auch Teile aus Kunststoff verwendbar. Kunststoff-Verstärkerplatten weisen gegenüber den Spritzguß-Verstärkerplatten den Vorteil auf, daß keine elektrische Isolierung der Durchführungen des Glasverstellantriebes, beispielsweise in Form von in die Durchführungen eingebrachten Hülsen, notwendig ist.

Die Erfindung kann auch auf neuere motorisch verstellbare Fahrzeug-Rückspiegel angewandt werden, welche eine intelligente Elektronik im Spiegelglasgehäuse verwenden, die analog und/oder digital angesteuert wird.

Hierbei kann eine die Elektronik aufnehmende Leiterplatte in direkter oder indirekter Anlage zur Verstärkerplatte angeordnet und die Verbindungselemente mit Kontaktstellen auf der Leiterplatte elektrisch verbunden sein, wobei die Kontaktstellen an einem die Strom- und/oder die Datensignalversorgung bereitstellenden Kabelsatz elektrisch angeschlossen sind. Auf diese Weise kann ein digital ansteuerbarer Glasverstellantrieb, welcher zwei digitale Signalleitung (digitales Signal/Masse) und zwei Leitungen für die Spannungsversorgung (analog Plus/Masse) benötigt, erfindungsgemäß über vier leitfähige Verbindungselemente angeschlossen werden. Weiterhin besteht die Möglichkeit durch Zusammenlegen der analogen und digitalen Masse mit nur drei Verbindungselementen, welche erfindungsgemäß gleichzeitig als elektrische Anschlußverbindungen dienen, zu arbeiten.

Um einen Kontakt der elektrisch zumindest abschnittsweise leitfähigen Schraube auf der Leiterplatte herzustellen, kann eine elektrisch leitfähige Mutter, beispielsweise als eine Einnietmutter, in der Leiterplatte angeordnet sein, in welche die Schraube eingedreht oder eingeschraubt wird, wobei die elektrisch leitfähige Einnietmutter auf der Leiterplatte mit der entsprechenden Leitung des Kabelsatzes verbunden wird.

Die Bereitstellung einer Leiterplatte in Anlage zur Verstärkerplatte bietet weiterhin die Möglichkeit, die Kontaktierung der Heizungsleitungen des Spiegelglases in ähnlicher Weise wie für den Fall der Verbindungselemente durch den Spiegelglasverstellantrieb hindurch zu realisieren. Auch in diesem Fall entfällt die Montage eines zusätzlichen elektrischen Kabelpaares und wird die Gefahr des Quetschens einer elektrischen Verbindung beim Zusammenbau vermieden.
Zu diesem Zweck ragen zwei federnde Kontaktstifte aus der Leiterplatte durch den Glasverstellantrieb hindurch und drücken auf zugeordnete Kontaktabschnitte der Heizung auf der Rückseite des Spiegelglasträgers.

Zum Sichern der elektrischen Kontakte bzw. der Elektronik gegen Feuchtigkeit und insbesondere gegen korrosionsunterstützendes Salzwasser kann die Leiterplatte im Fahrzeug-Außenspiegel geschützt sein. Die üblichen Verfahren zum Versiegeln von Elektronikbauteilen genügen im Hinblick auf die Dimension der umhüllenden Struktur, die Aushärtezeit und die Härtetemperatur nicht den Anforderungen, welche an Komponenten in einem Fahrzeug-Außenspiegel zu stellen sind. Aus dem Stand der Technik sind verschiedene Prozesse wie Umspritzen und Vergießen zum Abdichten von Elektronik-Baugruppen bekannt. Dies gilt jedoch nicht für die spezifische Anwendung im Außenspiegelbereich des Kfz. Dort kann erfindungsgemäß ein wirkungsvoller Schutz, insbesondere auch gegen Erschütterungen, durch Umspritzen der Leiterplatte, beispielsweise mit einem im Spritzgußverfahren angebrachten elastischen Material, welches die Leiterplatte umhüllt und abdichtet, bereitgestellt werden. Als Material kann beispielsweise ein Heißkleber verwendet werden. Der Vorteil eines derartigen Materials besteht auch darin, daß dieser einfach zu verarbeiten ist, nur eine geringe Aushärtzeit und Aushärtetemperatur benötigt und mit einer ausreichenden Dicke aufgetragen werden kann. Damit ist auch eine wirksame Längswasserabdichtung der elektronischen Komponenten sichergestellt.

Die Erfindung wird im folgenden durch das Beschreiben einiger Ausführungsformen unter Bezugnahme auf die anliegenden Zeichnungen erläutert. Es zeigen:
- Fig. 1: in einer Prinzipskizze in Explosionsdarstellung die elementaren Einzelbauteile eines Fahrzeug-Rückspiegels einer ersten erfindungsgemäßen und beispielhaften Ausführungsform;
- Fig. 2: im Ausschnitt die Verbindung des Glasverstellantriebs 3 mit der Kunststoffverstärkerplatte 4 und den jeweiligen elektrischen Kontaktierungen für die erste Ausführungsform;
- Fig. 3: in einer Prinzipskizze in Explosionsdarstellung die elementaren Einzelbauteile eines Fahrzeug-Rückspiegels einer zweiten beispielhaften Ausführungsform der Erfindung; und
- Fig. 4: im Detail in einer Prinzipskizze die Schraubverbindung der zweiten Ausführungsform, wobei eine Einnietmutter 7 in der Leiterplatte 8 angeordnet ist.

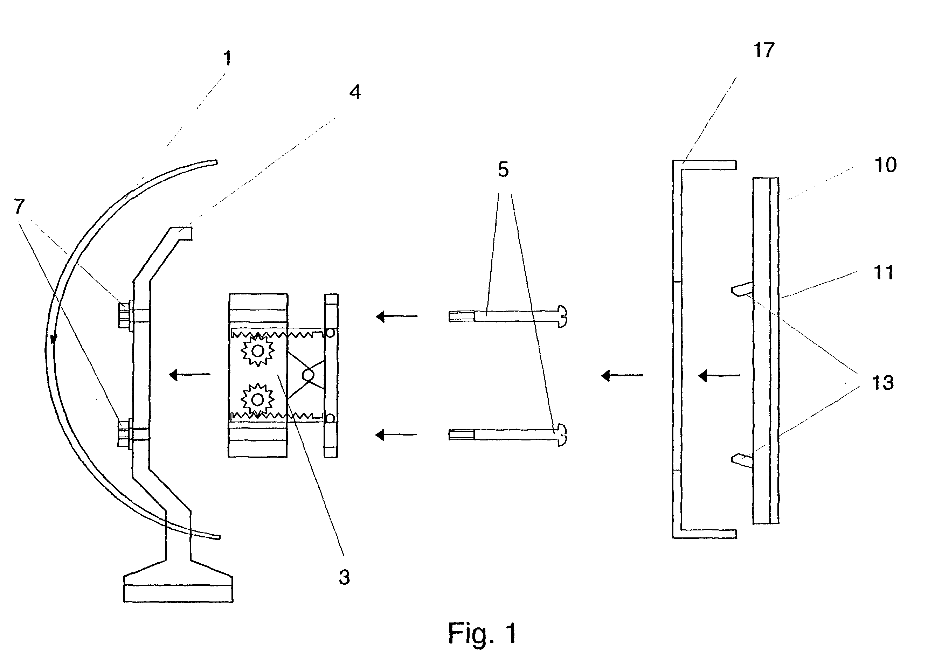

Fig. 1 gibt eine erste Ausführungsform der Erfindung in einer Explosionsdarstellung wieder. Danach umfaßt der motorisch verstellbare Fahrzeug-Rückspiegel erfindungsgemäß ein Gehäuse 1, welches eine Spiegelglasbaugruppe, einen auf die Ausrichtung der Spiegelglasbaugruppe einwirkenden Glasverstellantrieb 3 und eine Verstärkerplatte 4 aufnimmt, an welcher der Glasverstellantrieb 3 über eine Befestigungseinrichtung befestigt ist. Die Spiegelglasbaugruppe umfaßt eine Spiegelglasträger 10 mit einem daran angebrachten Spiegelglas 11 und einer Verkleidung 17. Die Befestigungseinrichtung leitet zumindest abschnittsweise elektrische Energie zum Glasverstellantrieb. In der dargestellten Ausführungsform umfaßt die Befestigungseinrichtung drei Verbindungselemente, von denen zum Zwecke der Klarheit der Darstellung nur zwei gezeichnet sind. Diese Befestigungselemente in Form von Schrauben 5 werden durch entsprechende Öffnungen in dem Glasverstellantrieb 3 eingesteckt, der Antrieb 3 und die Verstärkerplatte 4 in Anlage zueinander gebracht und die Schrauben 5 durch Öffnungen in der Verstärkerplatte 4 in die hinter den Öffnungen angebrachten Schraubenmuttern 7 eingedreht. Die Schrauben und die Schraubenmuttern bestehen aus einem leitfähigen Metall, im vorliegenden Beispiel aus Kupfer. Die Verstärkerplatte 4 ist aus einem schlagfesten, nicht leitfähigen Kunststoff hergestellt und stellt somit eine elektrische Isolierung der drei Muttern 7 sicher. In einer anderen Ausführungsform umfaßt die Verstärkerplatte 4 ein Aluminium-Spritzgußteil, wobei zwischen dem Aluminium-Spritzgußteil und den Schrauben sowie zwischen dem Spritzgußteil und den daran anliegenden Muttern 7 Isolierkörper zwischengeschaltet sind, um Kurzschlüsse zu vermeiden.

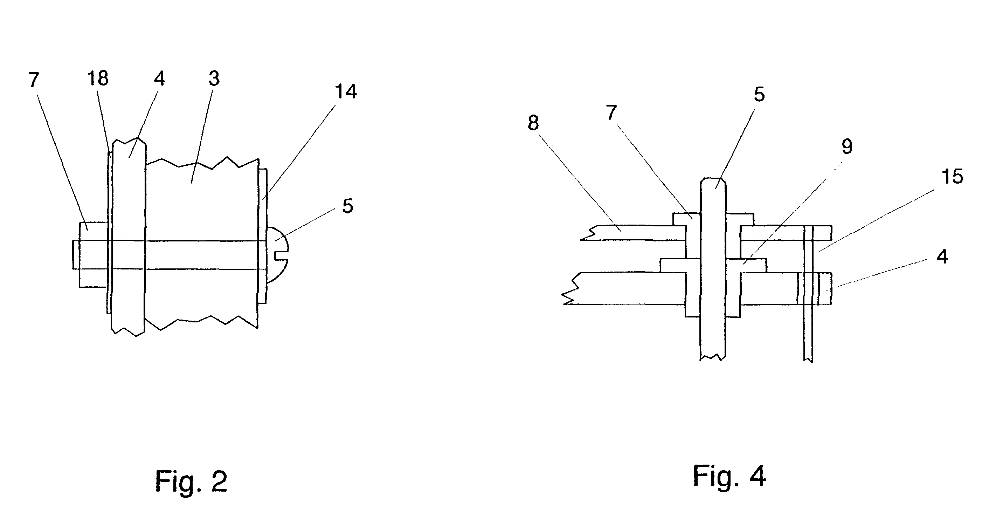

Die elektrische Kontaktierung des Glasverstellantriebs 3 auf der Seite des Schraubenkopfs und die elektrische Kontaktierung mit einer Stromversorgung auf der Seite der Schraubenmuttern 7 hinter der Verstärkerplatte ist in Fig. 2 für die Schraubenverbindung der ersten beispielhaften Ausführungsform dargestellt. Diese Schraubenverbindung hält den Antrieb 3 in Anlage zur Verstärkerplatte 4 und verläuft durch den Glasverstellantrieb hindurch. Zur Herstellung des zugeordnetetn elektrischen Kontaktes zum Antrieb ist ein Kontaktstreifen 14 in direkter Anlage zur elektrisch leitfähigen Schraube 5 gebracht. In der erfindungsgemäßen Ausführungsform verläuft die Schraube 5 durch den flachen Kontaktstreifen 14 hindurch und preßt mit dem Schraubenkopf den Kontaktstreifen 14 an den Glasverstellantrieb, womit gleichzeitig der elektrische Kontakt zwischen dem Kontaktstreifen 14 und der Schraube 5 hergestellt ist. Der jeweilige Kontaktstreifen wird weiter dem entsprechenden Antriebsanschluß zugeführt, was nicht dargestellt ist.

Auf der anderen Seite der Verbindung ist zwischen der elektrisch leitfähigen Mutter 7 und der Verstärkerplatte 4 eine dünne Metallplatte 18 angeordnet, welche den elektrischen Kontakt zur entsprechenden Leitung des Kabelsatzes herstellt. In einer weiteren Ausführungsform der Erfindung sind die Abschnitte der Verstärkerplatten, auf denen die Muttern aufliegen, mit einem leitfähigen Material beschichtet und die zugeordneten Leitungen des Kabelsatzes mit den jeweiligen Abschnitten elektrisch verbunden.

Nach der Montage des Glasverstellantriebs 3 an die Verstärkerplatte 4 und das Herstellen der notwendigen elektrischen Verbindungen wird die Spiegelglasbaugruppe auf den Antrieb 3 aufgeclipst. Hierzu umfaßt die Glasträgerplatte 10, auf welche das Spiegelglas 11 aufgeklebt ist, Clipelemente in Form von Fingern 13, die in einen Eingriff mit dem Rand des Glasverstellantriebs 3 gebracht werden, wobei zwischen dem Antrieb 3 und der Glasträgerplatte 10 weiterhin eine optische Verkleidung 17 angeordnet ist.

In anderen Ausführungsformen der Erfindung wird statt einer Schraube und einer Mutter ein Verbindungselement aus zwei Verbindungsteilen mit ineinandergreifenden Abschnitten verwendet, welche zusammen einen Bayonettverschluß bilden.

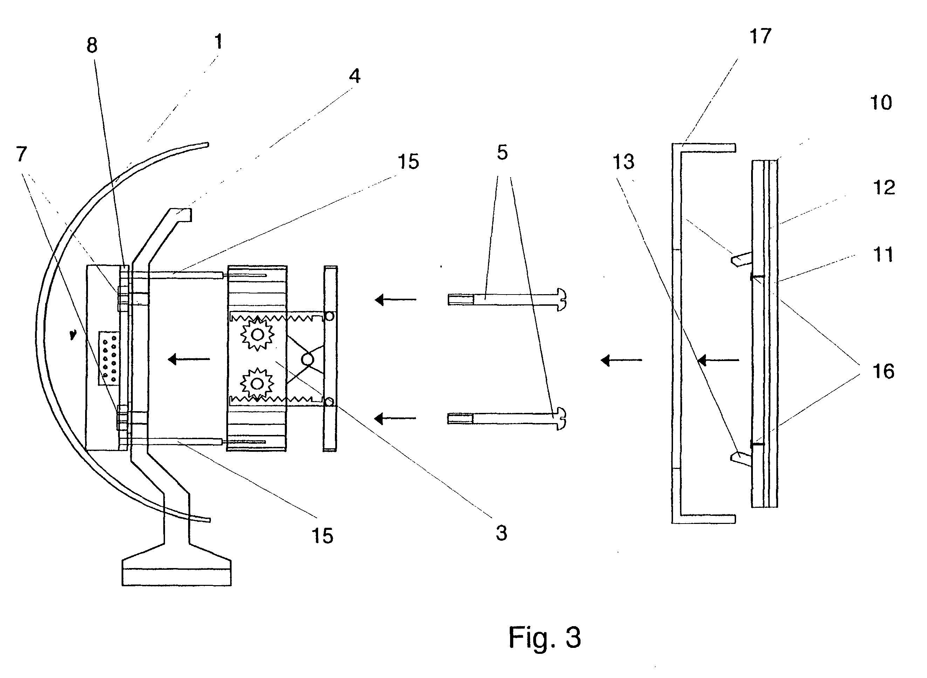

Fig. 3 zeigt in einer Explosionsdarstellung eine zweite Ausführungsform der Erfindung, bei welcher im Gegensatz zur erstbeschriebenen Ausführungsform auf der Rückseite der Verstärkerplatte 4 eine Leiterplatte 8 angeordnet ist. Die elektrische Kontaktierung zum Kabelsatz wird durch Anbringen einer Steckerbuchse auf der Leiterplatte 8, in die der Stecker des Kabelsatzes eingesteckt wird, realisiert. Je nach Ausführungsform der Erfindung werden die Leitungen entweder auf der Leiterplatte 8 direkt mit den Befestigungsmuttern 7 elektrisch verbunden oder erst nach Durchlaufen elektrischer Schaltkreise auf der Leiterplatte. Im letztgenannten Fall stellen zwei Leitungen die Stromversorgung des Fahrzeug-Rückspiegels sicher, während die dritte Leitung als digitale Signalleitung zum Steuern und Einstellen des Glasverstellantriebs 3 verwendet wird, wobei die digitale Masse der Steuerleitung mit der analogen Masse zusammengelegt ist.

In einer weiteren Ausführungsform der Erfindung wird die digitale Masse von der analogen getrennt zum Glasverstellantrieb 3 geführt. Statt drei Verbindungselementen in Form von elektrisch leitfähigen Befestigungsschrauben 5 führen in diesem Fall vier Schrauben durch den Glasverstellantrieb 3 hindurch und dienen gleichzeitig zum Befestigen des Antriebs an die Verstärkerplatte 4 und zum Kontaktieren der vier Anschlüsse des Antriebs 3 an die zugeordneten Anschlüsse auf der Leiterplatte 8.

Die elektrische Kontaktierung einer Befestigungsschrauben 5 über eine Mutter 7 mit der Leiterplatte 8 ist im Detail in Fig. 4 dargestellt. Zur Herstellung des elektrischen Kontaktes und zum Befestigen des Antriebs 3 wird die Schraube 5 in eine Mutter 7 eingeschraubt, welche in der Leiterplatte 8 eingenietet ist. Um die Schrauben von der metallischen Verstärkerplatte 4 zu isolieren, ist in der Durchtrittsöffnung der Verstärkerplatte 4 eine Isolierhülse 9 angeordnet, durch welche sich die Schraube 5 erstreckt.

Die in Fig. 3 dargestellte Ausführungsform der Erfindung weist eine Spiegelglasheizung 12 auf. Diese ist auf die Rückseite des Spiegelglases 11 zwischen dem Spiegelglas und dem Spiegelglasträger 10 aufgeklebt. Heizungs-Kontaktabschnitte 16 sind durch den Glasträger 10 hindurch auf dessen Rückseite geführt.

Die elektrische Verbindung der Spiegelheizung 12 wird durch zwei Kontaktstifte 15 bereitgestellt, die sich ausgehend von der Leiterplatte 8 durch die Verstärkerplatte 4 und den Glasverstellantrieb 3 bis auf die zugeordnete Kontaktabschnitte 16 auf der Glasträgerplatte 10 erstrecken. Diese Kontaktstifte 15 sind federnd ausgeführt und drücken nach der Montage auf die zugeordneten Kontaktabschnitte 16.

Je nach Ausführungsform der Erfindung ist die gesamte oder sind Teilbereiche der Leiterplatte mit den elektronischen Bauteilen mit einem dauerelastischen Material, beispielsweise einem Heißkleber, umspritzt. Die Leiterplatte wird dabei in eine Aluminiumform eingebracht und der Heißkleber mittels Preßluft von bis zu 4 bar und einer Temperatur von ungefähr 120 °C in die Form eingespritzt.

## Patentansprüche

1. Motorisch verstellbarer Fahrzeug-Rückspiegel, umfassend
- ein Gehäuse (1), welches
- eine Spiegelglasbaugruppe beinhaltet, sowie zumindest einen auf die Ausrichtung der Spiegelglasbaugruppe einwirkenden
- Glasverstellantrieb (3), der mittels einer
- Befestigungseinrichtung an
- einer Verstärkerplatte (4) befestigt ist,
**dadurch gekennzeichnet, daß**
die Befestigungseinrichtung zumindest einen Abschnitt zum Übertragen von elektrischer Energie und/oder elektrischen Signalen zum Glasverstellantrieb aufweist.

2. Motorisch verstellbarer Fahrzeug-Rückspiegel nach Anspruch 1,
**dadurch gekennzeichnet, daß**
die Befestigungseinrichtung wenigstens drei Verbindungselemente umfaßt, welche den Glasverstellantrieb (3) zumindest abschnittsweise in einer direkten oder indirekten Anlage zur Verstärkerplatte (4) halten.

3. Motorisch verstellbarer Fahrzeug-Rückspiegel nach Anspruch 2,
**dadurch gekennzeichnet, daß**
zumindest ein Verbindungselement wenigstens abschnittsweise elektrisch leitfähig ist.

4. Motorisch verstellbarer Fahrzeug-Rückspiegel nach einem der Ansprüche 2 oder 3,
**dadurch gekennzeichnet, daß**
sich ein Verbindungselement durch die Verstärkerplatte (4) und in einer Öffnung durch den Glasverstellantrieb (3) hindurch erstreckt.

5. Motorisch verstellbarer Fahrzeug-Rückspiegel nach einem der Ansprüche 2, 3 oder 4,
**dadurch gekennzeichnet, daß**
die wenigstens drei Verbindungselemente nicht in direktem elektrischen Kontakt zueinander stehend angeordnet sind.

6. Motorisch verstellbarer Fahrzeug-Rückspiegel nach einem der Ansprüche 2, 3, 4 oder 5,
**dadurch gekennzeichnet, daß**
zumindest ein Verbindungselement in der Nähe zum oder an einem ersten Ende elektrisch mit einer Anschlußleitung des Motors und in der Nähe zum oder an einem zweiten Ende elektrisch an einen die Stromund/oder Datensignalversorgung bereitstellenden Kabelsatz angeschlossen ist.

7. Motorisch verstellbarer Fahrzeug-Rückspiegel nach einem der Ansprüche 2, 3, 4, 5 oder 6,
**dadurch gekennzeichnet, daß**
zumindest eines der Verbindungselemente eine Schraube (5) ist, die in eine Mutter (7) eingeschraubt ist, wobei wenigstens der Glasverstellantrieb (3) und die Verstärkerplatte (4) zwischen dem Schraubenkopf und der Schraubenmutter (7) angeordnet sind.

8. Motorisch verstellbarer Fahrzeug-Rückspiegel nach einem der Ansprüche 2, 3, 4, 5, 6, oder 7,
**dadurch gekennzeichnet, daß**
zumindest eines der Verbindungselemente aus zwei Teilen besteht, welche ineinandergreifend einen Drehschnappverschluß, beispielsweise einen Bayonetverschluß bilden, wobei zwischen den beiden Enden des Verbindungselementes zumindest der Glasverstellantriebantrieb (3) und die Verstärkerplatte (4) angeordnet ist, wenn der Drehschnappverschluß geschlossen ist.

9. Motorisch verstellbarer Fahrzeug-Rückspiegel nach einem der vorstehenden Ansprüche,
**dadurch gekennzeichnet, daß**
eine Leiterplatte (8) in direkter oder indirekter Anlage zur Verstärkerplatte (4) angeordnet ist, und welche Kontaktstellen aufweist, die elektrisch an die jeweiligen zweiten Enden der Verbindungselemente angeschlossen sind, wobei die Kontaktstellen mit einem die Strom- und/oder Datensignalversorgung bereitstellenden Kabelsatz elektrisch verbunden sind.

10. Motorisch verstellbarer Fahrzeug-Rückspiegel nach Anspruch 7 und 9,
**dadurch gekennzeichnet, daß**
in der Leiterplatte (8) eine Mutter (7), beispielsweise eine Einnietmutter angeordnet ist, in welche das Verbindungselement einschraubar ist.

11. Motorisch verstellbarer Fahrzeug-Rückspiegel nach einem der Ansprüche 9 oder 10,
**dadurch gekennzeichnet, daß**
sich auf der Leiterplatte (8) angeordnete Kontakte, welche einer Spiegelglasheizung (12) zugeordnet sind, durch zumindest eine Durchgangsöffnung in dem Spiegelglasverstellantrieb (3) hindurch bis auf zugeordnete Kontaktabschnitte (16) der Spiegelglasheizung (12) erstrecken.

12. Motorisch verstellbarer Fahrzeug-Rückspiegel nach Anspruch 11,
**dadurch gekennzeichnet, daß**
die Spiegelglasbaugruppe ein auf einem Spiegelglasträger (10) angeordnetes Spiegelglas (11) mit einer auf der Rückseite des Spiegelglases angebrachter Spiegelglasheizung (12) umfaßt, wobei elektrische Kontaktabschnitte (16) der Heizung auf die Rückseite des Spiegelglasträgers geführt sind,
und die Leiterplatte (8) mit zumindest zwei federnden Kontaktstiften (15) ausgestattet ist, welche elektrisch mit den jeweiligen Heizungsleitungen des Kabelsatzes verbunden sind,
und sich die Kontaktstifte (15) im wesentlichen parallel zu den Verbindungselementen durch den Glasverstellantrieb (3) hindurch erstrecken und auf die zugeordneten Kontaktabschnitte (16) auf der Rückseite des Spiegelglasträgers (10) drücken.

13. Motorisch verstellbarer Fahrzeug-Rückspiegel nach Anspruch 9, 10, 11 oder 12,
**dadurch gekennzeichnet, daß**
zumindest die Leiterplatte (8) mit einem Material umspritzt ist.

14. Motorisch verstellbarer Fahrzeug-Rückspiegel nach Anspruch 13,
**dadurch gekennzeichnet, daß** das Material ein dauerelastischer Heißkleber ist.

## Claims

1. A motorised adjustable vehicle rear-view mirror, comprising
- a housing (1), which
- comprises a mirror glass subassembly, and at least
- one glass adjustment drive (3), which acts upon the alignment of the mirror glass subassembly and is secured by means of a
- securing device to
- a reinforcement plate (4), **characterised in that** the securing device comprises at least one section for transmitting electrical energy and/or electrical signals to the glass adjustment drive.

2. A motorised adjustable rear-view mirror according to claim 1, **characterised in that** the securing device comprises at least three connecting elements, which hold the glass adjustment drive (3) at least in sections in direct or indirect abutment with the reinforcement plate (4).

3. A motorised adjustable rear-view mirror according to claim 2, **characterised in that** at least one connecting element is electrically conductive at least in sections.

4. A motorised adjustable rear-view mirror according to one of claims 2 or 3, **characterised in that** a connecting element extends through the reinforcing plate (4) and in an opening through the glass adjustment drive (3).

5. A motorised adjustable rear-view mirror according to one of claims 2, 3 or 4, **characterised in that** the at least three connecting elements are arranged so as not to lie in direct electrical contact with one another.

6. A motorised adjustable rear-view mirror according to one of claims 2, 3, 4 or 5, **characterised in that** at least one connecting element is electrically connected in the vicinity of or at a first end to a connecting line of the motor and in the vicinity of or at a second end to a cable assembly providing the current supply and/or the data signal supply.

7. A motorised adjustable rear-view mirror according to one of claims 2, 3, 4, 5 or 6, **characterised in that** at least one of the connecting elements is a screw (5), which is screwed into a nut (7), at least the glass adjustment drive (3) and the reinforcement plate (4) being arranged between the screw head and the screw nut (7).

8. A motorised adjustable rear-view mirror according to one of claims 2, 3, 4, 5, 6 or 7, **characterised in that** at least one of the connecting elements is formed by two parts, which engage in one another to form a rotary snap lock, for example a bayonet lock, at least the glass adjustment drive (3) and the reinforcement plate (4) being arranged between the two ends of the connecting element when the rotary snap lock is closed.

9. A motorised adjustable rear-view mirror according to one of the preceding claims, **characterised in that** a circuit board (8) is arranged in direct or indirect abutment with the reinforcement plate (4) and comprises contact points, which are electrically connected to the respective second ends of the connecting elements, the contact points being electrically connected to a cable assembly providing the current supply and/or the data signal supply.

10. A motorised adjustable rear-view mirror according to claims 7 and 9, **characterised in that** a nut (7), for example a rivet nut, into which the connecting element can be screwed, is arranged in the circuit board (8).

11. A motorised adjustable rear-view mirror according to one of claims 9 or 10, **characterised in that** contacts arranged on the circuit board (8), which are associated with a mirror glass heating element (12), extend through at least one through opening in the mirror glass adjustment drive (3) to associated contact sections (16) of the mirror glass heating element (12).

12. A motorised adjustable rear-view mirror according to claim 11, **characterised in that** the mirror glass subassembly comprises a mirror glass (11) arranged on a mirror glass support (10) with a mirror glass heating element (12) fitted to the rear side of the mirror glass, electrical contact sections (16) of the heating element being guided onto the rear side of the mirror glass support, and the circuit board (8) is equipped with at least two resilient contact pins (15), which are electrically connected to the respective heating element lines of the cable assembly, and the contact pins (15) extend substantially parallel to the connecting elements through the glass adjustment drive (3) and press onto the associated contact sections (16) on the rear side of the mirror glass support (10).

13. A motorised adjustable rear-view mirror according to claim 9, 10, 11 or 12, **characterised in that** a material is injected around at least the circuit board (8).

14. A motorised adjustable rear-view mirror according to claim 13, **characterised in that** the material is a permanently elastic high-temperature adhesive.

## Revendications

1. Rétroviseur de véhicule à réglage motorisé, comprenant un boîtier (1) qui renferme un groupe miroir ainsi qu'au moins un mécanisme d'entraînement (3) de réglage de miroir agissant sur l'orientation du groupe miroir, qui est fixé au moyen d'un dispositif de fixation à une plaque de renfort (4), **caractérisé en ce que** le dispositif de fixation comporte au moins un segment adapté pour transmettre une énergie électrique et/ou des signaux électriques au mécanisme d'entraînement de réglage du miroir.

2. Rétroviseur de véhicule à réglage motorisé selon la revendication 1, **caractérisé en ce que** le dispositif de fixation comprend au moins trois éléments d'assemblage qui tiennent le mécanisme d'entraînement (3) de réglage du miroir, au moins par endroits, en appui direct ou indirect sur la plaque de renfort (4).

3. Rétroviseur de véhicule à réglage motorisé selon la revendication 2, **caractérisé en ce qu'**au moins un élément d'assemblage est conducteur de l'électricité au moins par endroits.

4. Rétroviseur de véhicule à réglage motorisé selon une des revendications 2 et 3, **caractérisé en ce qu'**un élément d'assemblage s'étend à travers la plaque de renfort (4) et est engagé dans une ouverture ménagée à travers le mécanisme d'entraînement (3) de réglage du miroir.

5. Rétroviseur de véhicule à réglage motorisé selon une des revendications 2, 3 ou 4, **caractérisé en ce que** les au moins trois éléments d'assemblage ne sont pas disposés en contact électrique direct entre eux.

6. Rétroviseur de véhicule à réglage motorisé selon une des revendications 2, 3, 4 ou 5, **caractérisé en ce que**, dans le voisinage de la première éxtrémité ou à une première extrémité, au moins un élément d'assemblage est relié électriquement à une ligne de connexion du moteur et, dans le voisinage de la deuxième extrémité ou à une deuxième extrémité, il est connecté électriquement à un faisceau de câbles qui assure l'alimentation électrique et/ou l'alimentation en signaux de données.

7. Rétroviseur de véhicule à réglage motorisé selon une des revendications 2, 3, 4, 5 ou 6, **caractérisé en ce qu'**au moins un des éléments d'assemblage est une vis (5) vissée dans un écrou (7), au moins le mécanisme d'entraînement (3) de réglage du miroir et la plaque de renfort (4) étant disposés entre la tête de la vis et l'écrou (7).

8. Rétroviseur de véhicule à réglage motorisé selon une des revendications 2, 3, 4, 5, 6 ou 7, **caractérisé en ce qu'**au moins un des éléments d'assemblage est composé de deux pièces qui, en s'engageant l'une dans l'autre, forment une fermeture tournante à encliquetage, par exemple une fermeture à baïonnette, au moins le mécanisme d'entraînement (3) de réglage du miroir et la plaque de renfort (4) étant agencés entre les deux extrémités de l'élément d'assemblage lorsque la fermeture tournante à encliquetage est fermée.

9. Rétroviseur de véhicule à réglage motorisé selon une des revendications précédentes, **caractérisé en ce qu'**un circuit imprimé (8) est disposé en contact direct ou indirect avec la plaque de renfort (4), laquelle présente des zones de contact qui sont connectées électriquement aux deuxièmes extrémités respectives des éléments d'assemblage, les zones de contact étant reliées électriquement à un faisceau de câbles qui assure l'alimentation électrique et/ou l'alimentation en signaux de données.

10. Rétroviseur de véhicule à réglage motorisé selon les revendications 7 et 9, **caractérisé en ce que** dans le circuit imprimé (8) est agencé un écrou (7), par exemple un écrou riveté, dans lequel l'élément d'assemblage peut être vissé.

11. Rétroviseur de véhicule à réglage motorisé selon une des revendications 9 ou 10, **caractérisé en ce que** des contacts agencés sur le circuit imprimé (8), associés à un dispositif de chauffage de miroir (12), s'étendent à travers au moins une ouverture traversante ménagée dans le mécanisme d'entraînement (3) de réglage du miroir, jusqu'à atteindre des segments de contact correspondants (16) du dispositif de chauffage (12) du miroir.

12. Rétroviseur de véhicule à réglage motorisé selon la revendication 11, **caractérisé en ce que** le groupe miroir comprend un miroir (11) disposé sur un support de miroir (10) et équipé d'un dispositif de chauffage de miroir (12) agencé sur la face amère du miroir, des segments de contact électriques (16) du dispositif de chauffage étant prolongés sur la face arrière du support de miroir, et **en ce que** le circuit imprimé (8) est équipé d'au moins deux branches de contact élastiques (15) qui sont reliées électriquement aux conducteurs de chauffage correspondants du faisceau de câbles, et **en ce que** les branches de contact (15) s'étendent sensiblement parallèlement aux éléments d'assemblage à travers le mécanisme d'entraînement (3) de réglage du miroir et exercent une pression sur les segments de contact correspondants (16) situés sur la face arrière du support de miroir (10).

13. Rétroviseur de véhicule à réglage motorisé selon la revendication 9, 10, 11 ou 12, **caractérisé en ce qu'**au moins le circuit imprimé (8) est enrobé d'une matière

14. Rétroviseur de véhicule à réglage motorisé selon la revendication 13, **caractérisé en ce que** la matière est une colle thermo-adhésive durablement élastique.
